# EUROPEAN PATENT APPLICATION

(11) **EP 4 796 825 A1**
(43) Date of publication of application: **26.08.2026**
(21) Application number: 26160412.8
(22) Date of filing: 24.02.2026
(51) Int. Cl.: F16L 23/028

(54) **PIPE ASSEMBLY AND KIT OF PARTS FOR A PIPE ASSEMBLY**

(30) Priority: 25.02.2025 GB 202502740
(71) Applicant: Airbus Operations Limited, Bristol BS34 7PA (GB)
(72) Inventor: PHILLIPS, Samuel, Bristol, BS34 7PA (GB)
(74) Representative: EIP

(57) **Abstract**

Disclosed is a pipe assembly comprising a first tubular pipe section, a second tubular pipe section and a fastener system that fastens the first tubular pipe section to the second tubular pipe section to define a flow path through the first tubular pipe section and the second tubular pipe section. The first tubular pipe section extends along a common central axis and comprises a first engagement feature. The second tubular pipe section extends along the common central axis and comprises a second engagement feature. The fastener system comprises: a first fastener sub-system and a second fastener sub-system. The first fastener sub-system has a first component on the first tubular pipe section and a first fastener arrangement that fastens the first component to the second engagement feature so that the first engagement feature is located between the first component and the second engagement feature to thereby restrict movement of the first tubular pipe section away from the second tubular pipe section in a direction of the common central axis. The second fastener sub-system has a second component on the second tubular pipe section and a second fastener arrangement that fastens the second component to the first engagement feature so that the second engagement feature is located between the second component and the first engagement feature to thereby restrict movement of the first tubular pipe section away from the second tubular pipe section in the direction of the common central axis.

## Description

### TECHNICAL FIELD

The present invention relates to pipe assemblies, fuel systems (such as hydrogen fuel systems) comprising the pipe assemblies, aircraft comprising the pipe assemblies or the fuel systems, and kits of parts for pipe assemblies.

### BACKGROUND

Hydrogen fuel systems for aircraft may comprise pipes, such as vacuum-insulated pipes, for transporting hydrogen fuel, such as cryogenic or gaseous hydrogen fuel, between components of the hydrogen fuel system. Such fuel systems typically comprise a plurality of pipes, connected to one another via couplings. The couplings are arranged to provide a sealed joint between pipes to inhibit fluid flow between an interior and an exterior of the pipes at the coupling.

### SUMMARY

A first aspect of the present invention provides a pipe assembly comprising a first tubular pipe section, a second tubular pipe section and a fastener system that fastens the first tubular pipe section to the second tubular pipe section to define a flow path through the first tubular pipe section and the second tubular pipe section, wherein: the first tubular pipe section extends along a common central axis and comprises a first engagement feature; the second tubular pipe section extends along the common central axis and comprises a second engagement feature; and the fastener system comprises: a first fastener sub-system having a first component on the first tubular pipe section and a first fastener arrangement that fastens the first component to the second engagement feature so that the first engagement feature is located between the first component and the second engagement feature to thereby restrict movement of the first tubular pipe section away from the second tubular pipe section in a direction of the common central axis; and a second fastener sub-system having a second component on the second tubular pipe section and a second fastener arrangement that fastens the second component to the first engagement feature so that the second engagement feature is located between the second component and the first engagement feature to thereby restrict movement of the first tubular pipe section away from the second tubular pipe section in the direction of the common central axis.

The provision of the first and second fastener sub-systems may provide plural load paths along which loads may be transferred from one of the first tubular pipe section and the second tubular pipe section to the other of the first tubular pipe section and the second tubular pipe section. As a result, each of the first and second fastener sub-systems may utilise lighter weight components than those of a comparative single fastener system for fastening together the first tubular pipe section and the second tubular pipe section. Lighter weight components may be cheaper to source and/or easier to manufacture. In some cases, the provision of the first and second fastener sub-systems may provide redundancy so that, in the event that one of the first and second fastener sub-systems were to fail during operational use of the pipe assembly, the other of the first and second fastener sub-systems could act to restrict movement of the first tubular pipe section away from the second tubular pipe section in the direction of the common central axis. This may help avoid decoupling of the first tubular pipe section from the second tubular pipe section, and thus help to avoid or reduce the chance of fluid leaking between the flow path and an environment external to the pipe assembly. When the pipe assembly is used for, for example, passage of cryogenic fluids, such as liquid hydrogen, along the flow path, decoupling of the first tubular pipe section from the second tubular pipe section may be unacceptable from a safety point of view.

Optionally, the first tubular pipe section comprises a first tubular wall structure that extends along the common central axis, and the first engagement feature is located at an exterior surface of the first tubular wall structure. Optionally, the second tubular pipe section comprises a second tubular wall structure that extends along the common central axis, and the second engagement feature is located at an exterior surface of the second tubular wall structure. Providing that the first and/or second engagement feature is located at an exterior surface of the first and/or second tubular wall structure may provide easier access to the first and/or second engagement feature, such as for assembly, maintenance or inspection of the pipe assembly. For example, cracks or other damage to the first and/or second engagement feature may be more readily visible and addressable.

Optionally, the first engagement feature comprises a first projection extending from the first tubular wall structure in a direction away from the common central axis. The first projection may be a first flange. Optionally, the second engagement feature comprises a second projection extending from the second tubular wall structure in a direction away from the common central axis. The second projection may be a second flange. Providing that the first and/or second engagement feature comprises such a projection may provide even easier access to the first and/or second engagement feature, such as for assembly, maintenance or inspection of the pipe assembly. For example, cracks or other damage to the first and/or second engagement feature may be more readily visible and addressable.

Optionally, the first projection and/or the second projection is annular and encircles the common central axis. This may enable a fastening force imparted on the first projection and/or the second projection, or on the first tubular pipe section and/or the second tubular pipe section, to be spread around a circumference of the pipe assembly. Optionally, the first projection and/or the second projection is centred on the common central axis.

Optionally, the pipe assembly is configured so that the first fastener arrangement fastens the first component to the second projection so that the first projection is trapped between the first component and the second projection. Optionally, the pipe assembly is configured so that the second fastener arrangement fastens the second component to the first projection so that the second projection is trapped between the second component and the first projection. Each such trapping may provide an interlock that helps to positively restrict movement of the first tubular pipe section away from the second tubular pipe section in the direction of the common central axis.

Optionally, the first engagement feature comprises a first shoulder extending from the first tubular wall structure in a direction away from the common central axis. Optionally, the second engagement feature comprises a second shoulder extending from the second tubular wall structure in a direction away from the common central axis. Optionally, the pipe assembly is configured so that the first fastener arrangement fastens the first component to the second projection so that the first component abuts the first shoulder and the first projection abuts the second projection. Optionally, the pipe assembly is configured so that the second fastener arrangement fastens the second component to the first projection so that the second component abuts the second shoulder and the second projection abuts the first projection. Provision of the first shoulder and/or the second shoulder may improve ease of access to the first component and/or the second component, respectively, and/or to the first projection and/or the second projection, respectively. This may facilitate configuration, checking or maintenance of the first fastener arrangement and/or the second fastener arrangement, respectively. For example, cracks or other damage to the first and/or second engagement feature or to the first and/or second component may be more readily visible and addressable.

Optionally, the first shoulder is spaced apart from the first projection and/or the second shoulder is spaced apart from the second projection. This may improve ease of access to the first projection and/or the second projection, respectively, which in turn may facilitate configuration, checking or maintenance of the first fastener arrangement and/or the second fastener arrangement, respectively. For example, cracks or other damage to the first and/or second projection may be more readily visible and addressable.

Optionally, the pipe assembly is configured so that the first shoulder prevents the first component from contacting the first projection and/or the second shoulder prevents the second component from contacting the second projection. This may improve ease of access to the first component and/or the second component, respectively, and/or to the first projection and/or the second projection, respectively. This may facilitate configuration, checking or maintenance of the first fastener arrangement and/or the second fastener arrangement, respectively. For example, cracks or other damage to the first and/or second component or to the first and/or second projection may be more readily visible and addressable. In certain cases, where the first fastener arrangement comprises first bolts and/or the second fastener arrangement comprises second bolts, providing that the first shoulder prevents the first component from contacting the first projection and/or the second shoulder prevents the second component from contacting the second projection may additionally, or alternatively, provide space for heads of the bolts or for nuts engaged with the bolts.

Optionally, the pipe assembly is configured so that the first fastener arrangement fastens the first component to the second engagement feature so that the first engagement feature is clamped by and between the first component and the second engagement feature. Optionally, the pipe assembly is configured so that the second fastener arrangement fastens the second component to the first engagement feature so that the second engagement feature is clamped by and between the second component and the first engagement feature. Each such clamping may provide a more secure fastening of the first tubular pipe section to the second tubular pipe section.

Optionally, the first component and/or the second component is annular and encircles the common central axis. This may enable a fastening force imparted on the first component and/or the second component, or on the first tubular pipe section and/or the second tubular pipe section, to be spread around a circumference of the pipe assembly. Optionally, the first component and/or the second component is centred on the common central axis.

Optionally, the first component is discrete from the first tubular pipe section and/or the second component is discrete from the second tubular pipe section. This may aid alignment of the first component and/or the second component with the second projection and/or the first projection, respectively, during assembly of the pipe assembly.

Optionally, the pipe assembly comprises a seal between the first tubular pipe section and the second tubular pipe section. Optionally, the fastener system fastens the first tubular pipe section to the second tubular pipe section so that the seal is compressed by and between the first tubular pipe section and the second tubular pipe section. Such a seal may reduce the chance of fluid leaking between the flow path and an environment external to the pipe assembly.

Optionally, the first fastener arrangement comprises first bolts and/or the second fastener arrangement comprises second bolts. Bolts may be readily available and relatively cheap, and may be replaceable with relative ease, as compared to more complex or bespoke alternatives. There may be, for example, six first bolts and/or six second bolts.

Optionally, the first component has a plurality of holes to receive the respective first bolts. Optionally, the second engagement feature has a plurality of holes to receive the respective first bolts.

Optionally, the second component has a plurality of holes to receive the respective second bolts. Optionally, the second engagement feature has a plurality of holes to receive the respective second bolts.

Optionally, the first bolts are circumferentially spaced apart about the common central axis and/or the second bolts are circumferentially spaced apart about the common central axis. This may enable a fastening force imparted on the first component and/or the second component, or on the first tubular pipe section and/or the second tubular pipe section, to be spread out, which may reduce or avoid local strains in the pipe assembly.

Optionally, the first bolts are parallel to each other and/or the second bolts are parallel to each other. Optionally, the first bolts are parallel to the second bolts.

Optionally, the first bolts are uniformly distributed about the common central axis. This may enable a fastening force imparted on the first component and/or the second projection to be spread around a circumference of the pipe assembly, which may reduce or avoid local strains in the pipe assembly. Optionally, the second bolts are uniformly distributed about the common central axis. This may enable a fastening force imparted on the second component and/or the first projection to be spread around a circumference of the pipe assembly, which may reduce or avoid local strains in the pipe assembly.

Optionally, the first bolts and the second bolts are relatively circumferentially arranged about the common central axis so that the first bolts alternate with the second bolts about the common central axis. This may provide the effect that, in the event of a failure of one of the first and second fastener sub-systems, a fastening force imparted by the remaining other one of the first and second fastener sub-systems is spread around a circumference of the pipe assembly, which may reduce or avoid local strains in the pipe assembly.

Optionally, the first bolts and the second bolts are uniformly distributed about the common central axis. This may further enable a fastening force to be spread around a circumference of the pipe assembly. In some cases, neighbouring ones of the first bolts and the second bolts are angularly offset, about the common central axis, by between ten and forty-five degrees, such as thirty degrees.

Optionally, the first tubular pipe section comprises a first outer wall and a first inner wall within the first outer wall, the first outer wall and the first inner wall are concentric along the common central axis, and the first outer wall is spaced from the first inner wall to define a first space. Optionally, the second tubular pipe section comprises a second outer wall and a second inner wall within the second outer wall, the second outer wall and the second inner wall are concentric along the common central axis, and the second outer wall is spaced from the second inner wall to define a second space. Such a first space and/or second space may help the pipe assembly be more suitable for passage of cryogenic fluids, such as hydrogen, therethrough.

Further optionally, the first space is evacuated to provide a vacuum in the first space and/or the second space is evacuated to provide a vacuum in the second space. Such evacuation may further help the pipe assembly be more suitable for passage of cryogenic fluids, such as liquid hydrogen, along the flow path. In some cases, the first tubular pipe section, the second tubular pipe section, or the overall pipe assembly may be considered or termed a vacuum jacketed pipe.

Optionally, each of the first fastener sub-system and the second fastener sub-system is sufficiently strong to resist movement of the first tubular pipe section away from the second tubular pipe section in the direction of the common central axis during operational use of the pipe assembly. The provision of the first and second fastener sub-systems each being sufficiently strong to resist this movement may provide redundancy so that, in the event one of the first and second fastener sub-systems were to fail during operational use of the pipe assembly, the other of the first and second fastener sub-systems could act to restrict movement of the first tubular pipe section away from the second tubular pipe section in the direction of the common central axis. Additionally, or alternatively, providing such redundancy may, in certain cases, mean that the pipe assembly is considered to be "safe life" sized and therefore unnecessary to inspect or necessary to inspect less frequently than a pipe assembly without such redundancy.

A second aspect of the present invention provides a fuel system comprising the pipe assembly of the first aspect of the present invention, wherein the first tubular pipe section and the second tubular pipe section together define a flow path for flow of fuel in the fuel system. Optionally, the fuel system is a hydrogen fuel system, and the flow path is for flow of hydrogen fuel in the hydrogen fuel system.

A third aspect of the present invention provides an aircraft comprising the pipe assembly of the first aspect of the present invention or the fuel system of the second aspect of the present invention.

A fourth aspect of the present invention provides a kit of parts for a pipe assembly, the kit of parts comprising: a first tubular pipe section extending along a first central axis and comprising a first engagement feature; a second tubular pipe section extending along a second central axis and comprising a second engagement feature; and a fastener system that is configured to fasten the first tubular pipe section to the second tubular pipe section, with the first central axis and the second central axis arranged coaxially on a common central axis, to define a flow path through the first tubular pipe section and the second tubular pipe section; wherein the fastener system comprises: a first fastener sub-system having a first component on, or mountable on, the first tubular pipe section so that the first engagement feature is located between the first component and the second engagement feature; and a second fastener sub-system having a second component on, or mountable on, the second tubular pipe section so that the second engagement feature is located between the second component and the first engagement feature.

Optionally, the first fastener sub-system has a first fastener arrangement configured to fasten the first component to the second engagement feature so that the first engagement feature is located between the first component and the second engagement feature to thereby restrict movement of the first tubular pipe section away from the second tubular pipe section in a direction of the central axis. Optionally, the second fastener sub-system has a second fastener arrangement configured to fasten the second component to the first engagement feature so that the second engagement feature is located between the second component and the first engagement feature to thereby restrict movement of the first tubular pipe section away from the second tubular pipe section in the direction of the central axis.

Optional features of any one of the aspects of the present invention may be applied equally to any other one of the aspects of the present invention, where appropriate. Effects or advantages noted as being resultant of features or optional features of any one of the aspects of the present invention may result equally from corresponding features or optional features of any other one of the aspects of the present invention, and are not reiterated in the interests of brevity.

### BRIEF DESCRIPTION OF THE DRAWINGS

Embodiments of the invention will now be described, by way of example only, with reference to the accompanying drawings, in which:
Figure 1 shows a schematic view of an example aircraft;
Figure 2 shows a schematic view of an example hydrogen fuel system;
Figure 3 shows a perspective view of an example pipe assembly;
Figure 4 shows a side view of the pipe assembly of Figure 3;
Figure 5 shows a cross-sectional view of the pipe assembly of Figure 3; and
Figures 6 to 9 show exploded perspective views of the pipe assembly of Figure 3, at various stages of assembly.

### DETAILED DESCRIPTION

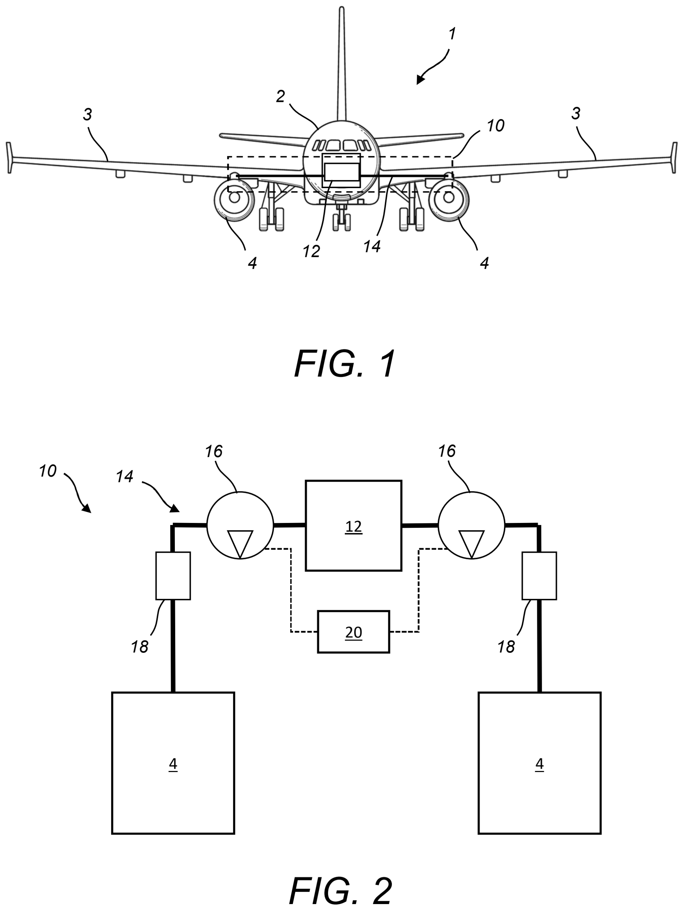

Figure 1 shows an example aircraft 1 comprising a fuselage 2, two wings 3 and a respective engine 4 mounted on each wing 3. The aircraft 1 comprises a hydrogen fuel system 10 comprising a hydrogen fuel tank 12 storing cryogenic hydrogen fuel. The hydrogen fuel system 10 comprises a pipe network 14 fluidically connecting the hydrogen fuel tank 12 and each engine 4 (here shown as single lines, for ease of comprehension). The pipe network 14 is configured to provide hydrogen fuel to each of the engines 4. The hydrogen fuel tank 12 is located in the fuselage 2, and the pipe network 14 extends from the fuselage 2 along the wings 3 of the aircraft 1, but in other examples the hydrogen fuel tank 12 may be two tanks located in the respective wings 3. The engines 4 each comprise a combustion engine, but in other examples, the engines 4 may each comprise a hydrogen fuel cell, which may generate electricity for powering a propulsor of the aircraft 1.

The hydrogen fuel system 10 is shown in more detail in Figure 2. The hydrogen fuel system 10 comprises the hydrogen fuel tank 12, storing the cryogenic hydrogen fuel for the engines 4, and the pipe network 14. The hydrogen fuel system 10 also comprises a respective pump 16 between the hydrogen fuel tank 12 and each of the engines 4. The hydrogen fuel system 10 also comprises a controller 20 configured to operate the pumps 16 to selectively cause hydrogen fuel to flow from the hydrogen fuel tank 12 to the respective engine 4 via the pipe network 14. The pipe network 14 comprises one or more joints 18, two of which are shown in Figure 2 for ease of comprehension. At the joints 18, adjacent pairs of pipes of the pipe network 14 are fluidically connected to one another. It will be appreciated that the arrangement shown in Figure 2 is exemplary only, and that in other examples the hydrogen fuel system 10 may comprise any other suitable arrangement of components such as pumps, valves, pipes, joints and/or other components for distributing fuel in the hydrogen fuel system 10.

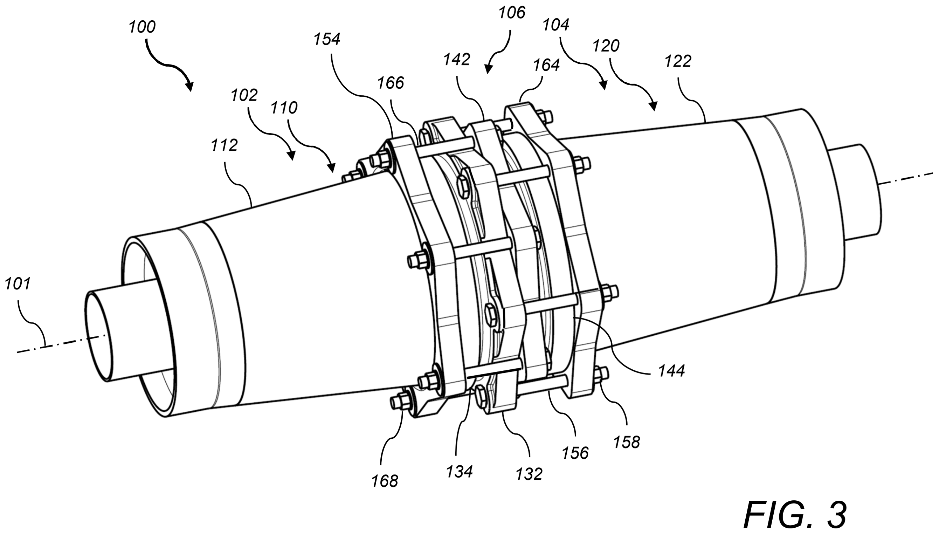

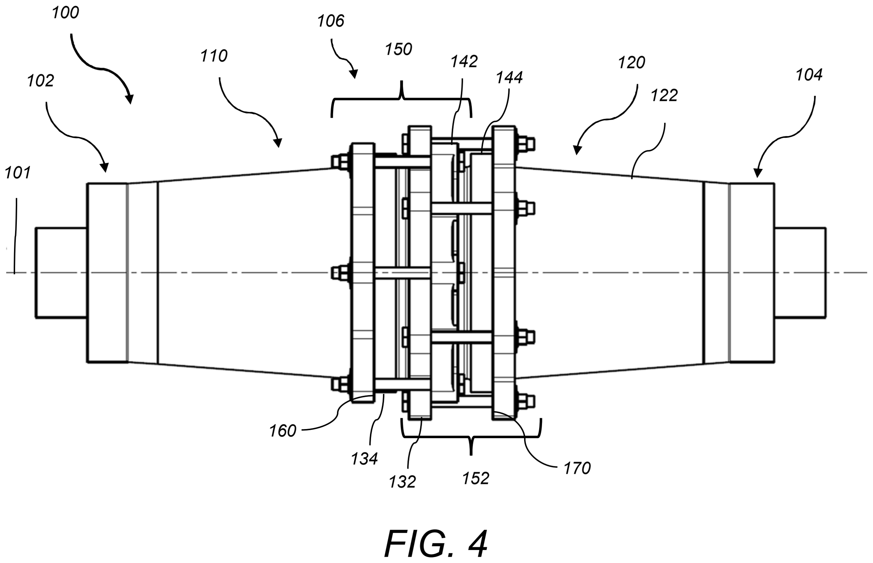

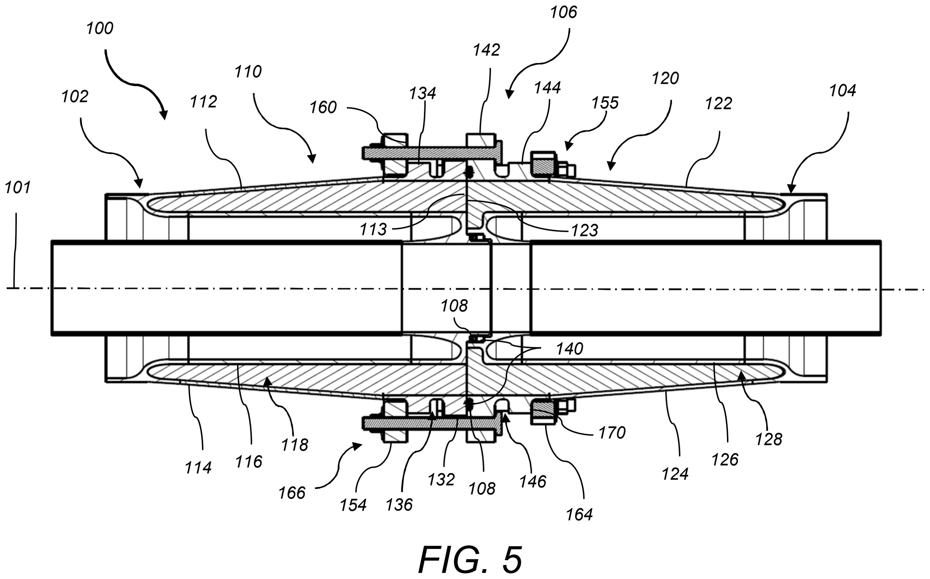

At least some of the joints 18 of the hydrogen fuel system 10 comprises a pipe assembly 100, which may also be referred to as a pipe connector assembly. An example pipe assembly is shown in Figures 3 to 9, and will now be described with reference thereto.

The pipe assembly 100 comprises a first tubular pipe section 102, a second tubular pipe section 104, a fastener system 106, and a seal arrangement 108. The seal arrangement 108 comprises a metallic gasket in this example, between the first tubular pipe section 102 and the second tubular pipe section 104. The seal arrangement 108 may be of an alternative construction or be omitted in other examples. In use in the pipe network 14, the first tubular pipe section 102 is attached to, or forms part of, an end section of a first pipe of an adjacent pair of pipes at a joint 18, and the second tubular pipe section 104 is attached to, or forms part of, an end section of a second pipe of the adjacent pair of pipes at the joint 18. The fastener system 106 is configured to fasten the first tubular pipe section 102 to the second tubular pipe section 104 to define a flow path through the first tubular pipe section 102 and the second tubular pipe section 104 that forms part of a flow path of the pipe network 14.

The first and second tubular pipe sections 102, 104 are vacuum jacketed pipes and both extend along a common central axis 101. The first tubular pipe section 102 has a first tubular wall structure 110 having an exterior surface 112 and a first end face 113 that faces the second tubular pipe section 104. The first tubular wall structure 110 comprises a first outer wall 114 and a first inner wall 116 within the first outer wall 114. The first outer wall 114 and the first inner wall 116 are concentric along the common central axis 101. The first outer wall 114 is spaced from the first inner wall 116 to define a first space 118, which is evacuated to provide a vacuum in the first space 118.

The second tubular pipe section 104 has a second tubular wall structure 120 having an exterior surface 122 and a second end face 123 that faces the first tubular pipe section 102. The second tubular wall structure 120 comprises a second outer wall 124 and a second inner wall 126 within the second outer wall 124. The second outer wall 124 and the second inner wall 126 are concentric along the common central axis 101. The second outer wall 124 is spaced from the second inner wall 126 to define a second space 128, which is evacuated to provide a vacuum in the second space 128. The second end face 123 defines a groove arrangement 140 for receiving the seal arrangement 108. The groove arrangement 140 is annular about the common central axis 101.

The first tubular wall section 102 comprises a first engagement feature, which in this example comprises a first annular flange 132 and a first annular shoulder 134 extending radially outward, i.e., in a direction away from the common central axis 101, from the exterior surface 112 of the first tubular wall structure 110. Each of the first annular flange 132 and the first annular shoulder 134 encircles, and is centred on, the common central axis 101. One side of the first annular flange 132 forms part of the first end face 113, and an opposing side of the first annular flange 132 faces towards the first annular shoulder 134. The first annular flange 132 is separated from the first annular shoulder 134 by a first gap 136, in a direction of the common central axis 101.

The first flange 132 has a number of first apertures 138 extending between the opposing sides of the first flange in a direction parallel to the common central axis 101. The first apertures 138, of which there are six in this example but there could be fewer or more in other examples, are uniformly distributed about the common central axis 101. In this example, each of the first apertures 138 is angularly offset from each adjacent first aperture by sixty degrees. Each of the first apertures 138 is positioned the same radial distance from the common central axis 101 and has the same diameter as each of the other first apertures 138. The first annular shoulder 134 has an outer diameter that is less than a minimum radial distance between the first apertures 138 and the common central axis 101. Between circumferentially adjacent first apertures 138, the first flange 132 comprises first radial indents 139, at which the first flange 132 has a diameter equal to the outer diameter of the first shoulder 134.

The second tubular wall section 104 comprises a second engagement feature, which in this example comprises a second annular flange 142 and a second annular shoulder 144 extending radially outward, i.e., in a direction away from the common central axis 101, from the exterior surface 122 of the second tubular wall structure 120. Each of the second annular flange 142 and the second annular shoulder 144 encircles, and is centred on, the common central axis 101. One side of the second annular flange 142 forms part of the second end face 123, and an opposing side of the second annular flange 142 faces towards the second annular shoulder 144. The second annular flange 142 is separated from the second annular shoulder 144 by a second gap 146, in a direction of the common central axis 101.

The second flange 142 has a number of second apertures 148 extending between the opposing sides of the second flange in a direction parallel to the common central axis 101. The second apertures 148, of which there are six in this example but there could be fewer or more in other examples, are uniformly distributed about the common central axis 101. In this example, each of the second apertures 148 is angularly offset from each adjacent second aperture 148 by sixty degrees. Each of the second apertures 148 is positioned the same radial distance from the common central axis 101 and has the same diameter as each of the other second apertures 148 and the first apertures 138. The second annular shoulder 144 has an outer diameter that is less than a minimum radial distance between the second apertures 148 and the common central axis 101. Between circumferentially adjacent second apertures 148, the second flange 142 comprises second radial indents 149, at which the second flange 142 has a diameter equal to the outer diameter of the second shoulder 144.

The fastener system 106 comprises a first fastener sub-system 150 and a second fastener sub-system 152. The first fastener sub-system 150 comprises a first component 154 mounted on the first tubular pipe section 102, and a first fastener arrangement 155, which in this example comprises six first bolts 156 and six first nuts 158 arranged to interface with the first bolts 156.

The first component 154 is an annular ring that extends around the first tubular pipe section 102, in particular around the exterior surface 112 of the first tubular wall structure 110. The first component 154 is discrete from the first tubular pipe section 102 and has an inner diameter that is greater than an outer diameter of the first tubular wall structure 110 to enable rotation of the first component 154 about the exterior surface 112 of the first tubular wall structure 110. The inner diameter of the first component 154 is less than the outer diameter of the first shoulder 134, so that the first component 154 cannot pass the first shoulder 134 in a direction of the common central axis 101 towards the first flange 132.

The first component 154 has a first face 160 that faces towards the first shoulder 134 and the first flange 132 in a direction of the common central axis 101. The first component 154 comprises first component apertures 162 extending through the first component 154 from the first face 160, and in a direction perpendicular to the first face 160. The first component apertures 162, of which there are the same number as the number of second apertures 148 of the second flange 144, are uniformly distributed around the first component 154. In this example, each of the first component apertures 162 is angularly offset from each adjacent first component aperture 162 by sixty degrees. Each of the first component apertures 162 is positioned the same radial distance from a central axis of the first component 154 as the radial distance of the second apertures 148 of the second flange 144 from the common central axis 101. Each of the first component apertures 162 has the same diameter as each of the second apertures 148, and is of a diameter through which a shaft of the first bolts 156 can pass.

The second fastener sub-system 152 comprises a second component 164 mounted on the second tubular pipe section 104, and a second fastener arrangement 165, which in this example comprises six second bolts 166 and six second nuts 168 arranged to interface with the second bolts 166.

The second component 164 is an annular ring that extends around the second tubular pipe section 104, in particular around the exterior surface 122 of the second tubular wall structure 120. The second component 164 is discrete from the second tubular pipe section 104 and has an inner diameter that is greater than an outer diameter of the second tubular wall structure 120 to enable rotation of the second component 164 about the exterior surface 122 of the second tubular wall structure 120. The inner diameter of the second component 164 is less than the outer diameter of the second shoulder 144, so that the second component 164 cannot pass the second shoulder 144 in a direction of the common central axis 101 towards the second flange 142.

The second component 164 has a second face 170 that faces towards the second shoulder 144 and the second flange 142 in a direction of the common central axis 101. The second component 164 comprises second component apertures 172 extending through the second component 164 from the second face 170, and in a direction perpendicular to the second face 170. The second component apertures 172, of which there are the same number as the number of first apertures 138 of the first flange 134, are uniformly distributed around the second component 164. In this example, each of the second component apertures 172 is angularly offset from each adjacent second component aperture 172 by sixty degrees. Each of the second component apertures 172 is positioned the same radial distance from a central axis of the second component 164 as the radial distance of the first apertures 138 of the first flange 134 from the common central axis 101. Each of the second component apertures 172 has the same diameter as each of the first apertures 138, and is of a diameter through which a shaft of the second bolts 166 can pass.

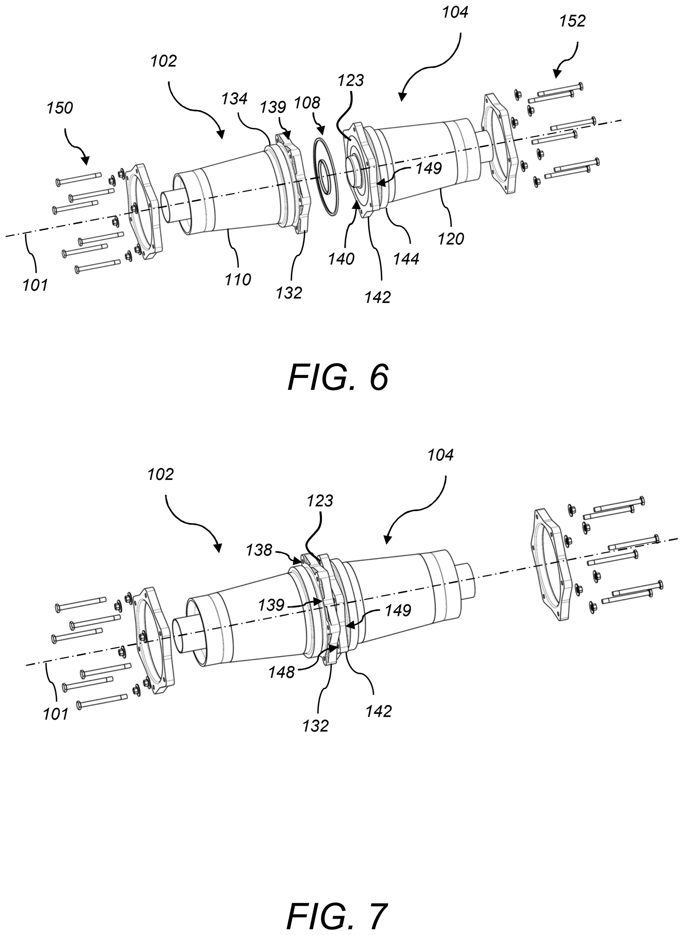

The fastener system 106 will be further described by outlining a process for assembling the pipe assembly 100, as shown schematically in Figures 6 to 9, and Figure 3 which shows the assembled pipe assembly 100.

The pipe assembly 100 is provided as a kit of parts. In other examples, the first and second fastener arrangements 155, 165 are provided separately to a remainder of the kits of parts for the pipe assembly 100.

As shown in Figure 6, the first tubular pipe section 102 and the second tubular pipe section 104 are aligned co-axially along the common central axis 101, with the first apertures 138 offset from the second apertures 148 by thirty degrees about the common central axis 101. Accordingly, the first apertures 138 alternate with the second apertures 148 about the common central axis 101. The first and second tubular pipe sections 102, 104 are arranged relative to one another so that the first and second end faces 113, 123 face one another. The seal arrangement 108 is positioned between the first end face 113 and the second end face 123.

As shown in Figure 7, the first and second tubular pipe sections 102, 104 are brought together in the direction of the common central axis 101 so that the seal arrangement 108 is seated in the groove arrangement 140 and forms an annular seal between first and second tubular pipe sections 102, 104.

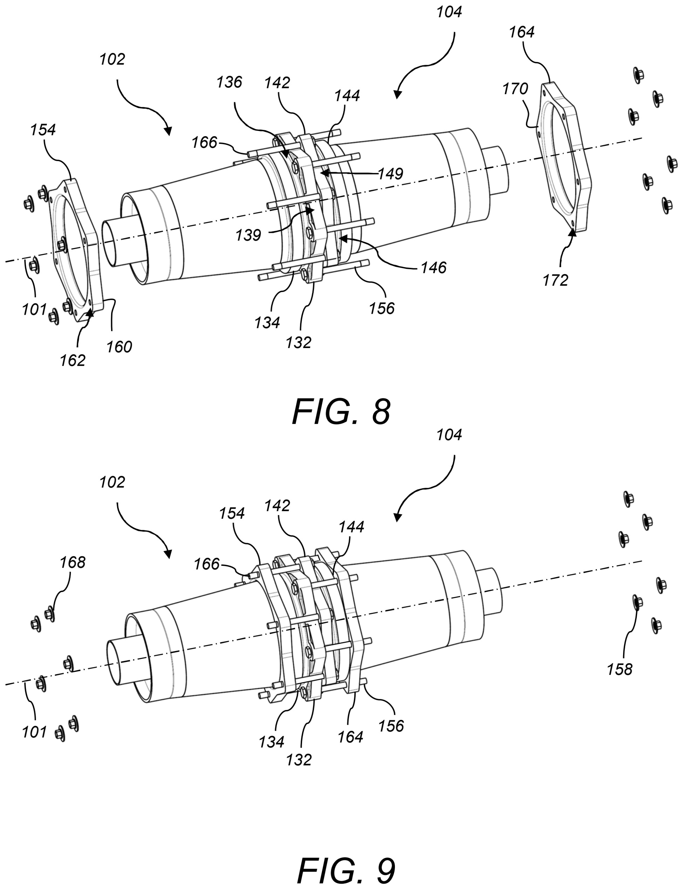

As shown in Figure 8, the first bolts 156 are passed through the respective first apertures 138 in a direction such that a head of each first bolt 156 is between the first flange 132 and the first shoulder 134 in the first gap 136. Each of the first bolts 156 extends generally parallel to the common central axis 101 towards the second tubular pipe section 104. Each of the first bolts 156 extends past the second flange 142 by virtue of the second flange indents 149, and has a length such as to also extend past the second shoulder 144 along the common central axis 101.

The second bolts 166 are passed through the respective second apertures 148 in a direction such that a head of each second bolt 166 is between the second flange 142 and the second shoulder 144 in the second gap 146. Each of the second bolts 166 extends generally parallel to the common central axis 101 towards the first tubular pipe section 102. Each of the second bolts 166 extends past the first flange 132 by virtue of the first flange indents 139, and has a length such as to also extend past the first shoulder 134 along the common central axis 101.

The first bolts 156 and the second bolts 166 are circumferentially spaced apart, and uniformly distributed, about the common central axis 101. Due to the first apertures 138 being offset from the second apertures 148 by thirty degrees, the first and second bolts 156, 166 are also offset by around thirty degrees from one another and individually alternate with one another about the common central axis 101.

As shown in Figure 9, the first component 154 is slid onto the first tubular pipe section 102 in the direction of the common central axis 101 with the first face 160 facing towards the first shoulder 134. The first component apertures 162 are generally aligned with the second apertures 148 of the second flange 142 in the direction of the common central axis 101. This allows the first component 154 to be slid onto the second bolts 166 by passing the second bolts 166 through the first component apertures 162. The second component 164 is slid onto the second tubular pipe section 104 in the direction of the common central axis 101 with the second face 170 facing towards the second shoulder 144. The second component apertures 172 are generally aligned with the first apertures 138 of the first flange 132 in the direction of the common central axis 101. This allows the second component 164 to be slid onto the first bolts 156 by passing the first bolts 156 through the second component apertures 172.

Due to the first apertures 138 being offset from the second apertures 148 by thirty degrees, the first and second components 154, 164 are also offset by around thirty degrees. It will be appreciated that, in some other examples, the first and/or second components 154, 164 are slid onto the respective first and second tubular pipe section 102, 104 before the first and second tubular pipe sections 102, 104 are aligned with one another along the common central axis 101, and/or before the first and second bolts 156, 166 are placed in the respective first and second apertures 138, 148. In some examples, the first and/or second components 154, 164 are attached, for example movably attached, to the respective first and second tubular pipe section 102, 104.

The first bolts 156 pass through the respective first apertures 138 and through the respective second component apertures 172. The second bolts 166 pass through the respective second apertures 148 and through the respective first component apertures 162. As assembled, the first and second bolts 156, 166 each extend parallel to the common central axis 101, and act to centre the first and second components 154, 164 on the common central axis 101.

As shown in Figure 3, the pipe assembly 100 is fastened together by screwing the first nuts 158 onto ends of the first bolts 156, and by screwing the second nuts 168 onto ends of the second bolts 166. This traps the first flange 132 between the second flange 142 and the first component 154, and traps the second flange 142 between the first flange 132 and the second component 164.

Tightening of the first nuts 158 pulls the first flange 132 towards the second component 164 so that the second face 170 of the second component 164 abuts the second shoulder 144, and the second flange 142 is clamped between the first flange 132 and the second component 164. Tightening of the second nuts 168 pulls the second flange 142 towards the first component 154 so that the first face 160 of the first component 154 abuts the first shoulder 134, and the first flange 132 is clamped between the second flange 142 and the first component 154. Thus, tightening of either the first nuts 158 or the second nuts 168 fastens the first tubular pipe section 102 to the second tubular pipe section 104 and compresses the seal arrangement 108. Accordingly, the pipe assembly 100 may help avoid decoupling of the first tubular pipe section 102 from the second tubular pipe section 104, and thus help to avoid or reduce the chance of fluid leaking between the flow path and an environment external to the pipe assembly 100, which would be unacceptable within the hydrogen fuel system 10 from a safety point of view.

Provision of the first gap 136 and the second gap 146 aids in holding the heads of the respective first and second bolts 156, 166 to inhibit rotation of the first and second bolts 156, 166 during tightening of the respective first and second nuts 158, 168. Provision of the first gap 138 and the second gap 146 also allows the first and second apertures 138, 148 to be positioned at a lesser radial distance from the common central axis 101 than if the first gap 136 and the second gap 146 were not present.

It will be appreciated that the first bolts 156 and/or the second bolts 166 can be arranged in an opposing direction along the common central axis 101 in other examples, so that the first nuts 158 are in the first gap 136 and/or the second nuts 168 are in the second gap 146.

Positioning of the first and second bolts 138, 148 alternately and uniformly about the common central axis allows, in the event of a failure of one of the first and second fastener sub-systems 150, 152 during operational use of the pipe assembly 100, a fastening force imparted by the fastener system 106 to be spread around a circumference of the pipe assembly 100, which may reduce or avoid local strains in the pipe assembly 100, particularly in the first and/or second flange 132, 142.

Providing first and second flanges 132, 142 that extend from the exterior surfaces 112, 122 of the respective first and second tubular wall structures 110, 120 provides access to the first and second flanges 132, 142 and the fastener system 106 from an exterior of the pipe assembly 100. This may aid assembly, maintenance and/or inspection of the pipe assembly 100. For example, cracks or other damage to the first and/or second flanges 132, 142 and/or the fastener system 106 may be readily visible and addressable.

The provision of the first and second fastener sub-systems 150, 152 provides plural load paths along which loads may be transferred from one of the first tubular pipe section 102 and the second tubular pipe section 104 to the other of the first tubular pipe section 102 and the second tubular pipe section 104.

Each of the first and second fastener sub-systems 150, 152 is sufficiently strong to resist movement of the first tubular pipe section 120 away from the second tubular pipe section 104 in the direction of the common central axis 101 during operational use of the pipe assembly 100 in the hydrogen fuel system 10 of the aircraft 1. Accordingly, separation of the first and second end faces 113, 123 in the direction of the common central axis 101 is resisted by both the first and second fastener sub-systems 150, 152 in operational use. The pipe assembly 100 thus provides redundancy: in the event one of the first and second fastener sub-systems 150, 152 were to fail during operational use of the pipe assembly 100, the other of the first and second fastener sub-systems 150, 152 could act to restrict movement of the first tubular pipe section 1002 away from the second tubular pipe section 104 in the direction of the common central axis 101.

Additionally, or alternatively, providing such redundancy may, in certain cases, mean that the pipe assembly 100 is considered to be "safe life" sized and therefore unnecessary to inspect or necessary to inspect less frequently than a pipe assembly without such redundancy.

It will be appreciated that whilst the above discussion relates to a pipe assembly 100 that is fluidically connected between a hydrogen fuel tank 11 and an engine 4 of an aircraft, in other examples the pipe assembly 100 may be employed in any other suitable system, such as in a refuel line of a refuel system for refuelling the hydrogen fuel tank 11. In other examples, the pipe assembly may be employed in a cryogenic fluid distribution system that is not installed on an aircraft, and/or that carries a fluid other than hydrogen.

It is to be noted that the term "or" as used herein is to be interpreted to mean "and/or", unless expressly stated otherwise.

## Claims

1. A pipe assembly comprising a first tubular pipe section, a second tubular pipe section and a fastener system that fastens the first tubular pipe section to the second tubular pipe section to define a flow path through the first tubular pipe section and the second tubular pipe section, wherein:
the first tubular pipe section extends along a common central axis and comprises a first engagement feature;
the second tubular pipe section extends along the common central axis and comprises a second engagement feature; and
the fastener system comprises:
a first fastener sub-system having a first component on the first tubular pipe section and a first fastener arrangement that fastens the first component to the second engagement feature so that the first engagement feature is located between the first component and the second engagement feature to thereby restrict movement of the first tubular pipe section away from the second tubular pipe section in a direction of the common central axis; and
a second fastener sub-system having a second component on the second tubular pipe section and a second fastener arrangement that fastens the second component to the first engagement feature so that the second engagement feature is located between the second component and the first engagement feature to thereby restrict movement of the first tubular pipe section away from the second tubular pipe section in the direction of the common central axis.

2. The pipe assembly of claim 1, wherein:
the first tubular pipe section comprises a first tubular wall structure that extends along the common central axis, and the first engagement feature is located at an exterior surface of the first tubular wall structure; and
the second tubular pipe section comprises a second tubular wall structure that extends along the common central axis, and the second engagement feature is located at an exterior surface of the second tubular wall structure.

3. The pipe assembly of claim 2, wherein:
the first engagement feature comprises a first projection extending from the first tubular wall structure in a direction away from the common central axis; and
the second engagement feature comprises a second projection extending from the second tubular wall structure in a direction away from the common central axis, and optionally wherein:
the first projection is annular and encircles the common central axis, and
the second projection is annular and encircles the common central axis.

4. The pipe assembly of claim 3, configured so that:
the first fastener arrangement fastens the first component to the second projection so that the first projection is trapped between the first component and the second projection; and
the second fastener arrangement fastens the second component to the first projection so that the second projection is trapped between the second component and the first projection.

5. The pipe assembly of claim 4, wherein:
the first engagement feature comprises a first shoulder extending from the first tubular wall structure in a direction away from the common central axis;
the second engagement feature comprises a second shoulder extending from the second tubular wall structure in a direction away from the common central axis; and
the pipe assembly is configured so that:
the first fastener arrangement fastens the first component to the second projection so that the first component abuts the first shoulder and the first projection abuts the second projection; and
the second fastener arrangement fastens the second component to the first projection so that the second component abuts the second shoulder and the second projection abuts the first projection,
and optionally wherein the pipe assembly is configured so that:
the first shoulder prevents the first component from contacting the first projection; and
the second shoulder prevents the second component from contacting the second projection.

6. The pipe assembly of any one of claims 3 to 5, configured so that:
the first fastener arrangement fastens the first component to the second engagement feature so that the first engagement feature is clamped by and between the first component and the second engagement feature; and
the second fastener arrangement fastens the second component to the first engagement feature so that the second engagement feature is clamped by and between the second component and the first engagement feature.

7. The pipe assembly of any one of claims 1 to 6, wherein:
the first component is annular and encircles the common central axis, and
the second component is annular and encircles the common central axis.

8. The pipe assembly of any one of claims 1 to 7, wherein:
the first component is discrete from first tubular pipe section, and
the second component is discrete from second tubular pipe section.

9. The pipe assembly of any one of claims 1 to 8, comprising a seal between the first tubular pipe section and the second tubular pipe section, wherein the fastener system fastens the first tubular pipe section to the second tubular pipe section so that the seal is compressed by and between the first tubular pipe section and the second tubular pipe section.

10. The pipe assembly of any one of claims 1 to 9, wherein:
the first fastener arrangement comprises first bolts; and
the second fastener arrangement comprises second bolts,
and optionally wherein:
the first bolts are circumferentially spaced apart about the common central axis; and
the second bolts are circumferentially spaced apart about the common central axis,
and/or, wherein the first bolts and the second bolts are relatively circumferentially arranged about the common central axis so that the first bolts alternate with the second bolts about the common central axis.

11. The pipe assembly of any one of claims 1 to 10, wherein each of the first fastener sub-system and the second fastener sub-system is sufficiently strong to resist movement of the first tubular pipe section away from the second tubular pipe section in the direction of the common central axis during operational use of the pipe assembly.

12. A fuel system comprising the pipe assembly of any one of claims 1 to 11, wherein the first tubular pipe section and the second tubular pipe section together define a flow path for flow of fuel in the fuel system.

13. An aircraft comprising the pipe assembly of any one of claims 1 to 11 or the fuel system of claim 12.

14. A kit of parts for a pipe assembly, the kit of parts comprising:
a first tubular pipe section extending along a first central axis and comprising a first engagement feature;
a second tubular pipe section extending along a second central axis and comprising a second engagement feature; and
a fastener system that is configured to fasten the first tubular pipe section to the second tubular pipe section, with the first central axis and the second central axis arranged coaxially on a common central axis, to define a flow path through the first tubular pipe section and the second tubular pipe section;
wherein the fastener system comprises:
a first fastener sub-system having a first component on, or mountable on, the first tubular pipe section so that the first engagement feature is located between the first component and the second engagement feature; and
a second fastener sub-system having a second component on, or mountable on, the second tubular pipe section so that the second engagement feature is located between the second component and the first engagement feature.

15. The kit of parts of claim 14, wherein:
the first fastener sub-system has a first fastener arrangement configured to fasten the first component to the second engagement feature so that the first engagement feature is located between the first component and the second engagement feature to thereby restrict movement of the first tubular pipe section away from the second tubular pipe section in a direction of the central axis; and
the second fastener sub-system has a second fastener arrangement configured to fasten the second component to the first engagement feature so that the second engagement feature is located between the second component and the first engagement feature to thereby restrict movement of the first tubular pipe section away from the second tubular pipe section in the direction of the central axis.
